# EUROPÄISCHE PATENTSCHRIFT

(11) **EP 2 066 718 B1**
(45) Veröffentlichungstag und Bekanntmachung des Hinweises auf die Patenterteilung: **07.03.2012**
(21) Anmeldenummer: 07788231.4
(22) Anmeldetag: 06.08.2007
(51) Int. Cl.: C08G 18/42, C08G 18/67, C08G 18/75, C09D 175/16

(54) **STRAHLENHÄRTBARE FORMULIERUNG, DIE ZU FLEXIBLEN BESCHICHTUNGEN MIT ERHÖHTEM KORROSIONSSCHUTZ AUF METALLUNTERGRÜNDEN FÜHRT**
RADIATION-CURABLE FORMULATION WHICH FORMS FLEXIBLE COATINGS WITH INCREASED CORROSION PROTECTION ON METALLIC SUBSTRATES
FORMULATION DURCISSABLE PAR RAYONNEMENT ET CONDUISANT À LA FORMATION DE REVÊTEMENTS FLEXIBLES À EFFET ACCRU DE PROTECTION CONTRE LA CORROSION SUR DES SUBSTRATS MÉTALLIQUES

(30) Priorität: 25.09.2006 DE 102006045041
(43) Veröffentlichungstag der Anmeldung: 10.06.2009
(73) Patentinhaber: Evonik Degussa GmbH, 45128 Essen (DE)
(72) Erfinder: SPYROU, Emmanouil, 46514 Schermbeck (DE); BRAND, Thorsten, 45772 Marl (DE)
(86) Internationale Anmeldenummer: PCT/EP2007/058106
(87) Internationale Veröffentlichungsnummer: WO 2008/037535

(56) Entgegenhaltungen:
- EP-A- 0 798 323
- WO-A-98/36325

## Beschreibung

Die Erfindung betrifft eine strahlenhärtbare Formulierung, die im ausgehärteten Zustand im besonderen Maße einen Korrosionsschutz für metallische Substrate bietet, und gleichzeitig ausreichend flexibel für eine Verformung ist.

Strahlenhärtbare Formulierungen sind bekannt.

Ethylenische ungesättigte Prepolymere werden z. B. in P. K. T. Oldring (Hrsg.), "Chemistry and Technology of UV- and EB-Formulations for Coatings, Inks and Paints", Vol. II. SITA Technology, London 1991 beschrieben, beispielsweise auf Basis von Epoxyacrylaten (Seiten 31 bis 68), Urethanacrylaten (Seiten 73 bis 123) und Melaminacrylaten (Seiten 208 bis 214). Auch in der Patentliteratur finden solche Formulierungen häufig Erwähnung, exemplarisch seien genannt JP 62110779 und EP 947 565.

Die Beschichtung von metallischen Untergründen stellt ein besonderes Problem für strahlenhärtbare Formulierungen dar, da es aufgrund von Schrumpfungsprozessen zu Haftungsverlust kommen kann. Daher werden für solche Untergründe häufig phosphorsäurehaltige Haftvermittler eingesetzt. Beispiele dafür sind US 5,128,387 (Beschichtung von Bierdosen) und JP 2001172554 (Beschichtung von diversen Dosen).

Bekanntermaßen zeigen Epoxyacrylate eine hervorragende Haftung sowie einen guten Korrosionsschutz auf Metalluntergründen. Nachteil solcher Beschichtungen ist aber die geringe Verformbarkeit nach der Aushärtung. Für einige Beschichtungstechnologien, z. B. Coil-Coating ist die Verformbarkeit der beschichteten Werkstücke ohne Riss der Beschichtung ausschlaggebend.

WO 03/022945 beschreibt niederviskose strahlenhärtbare Formulierungen für Metalluntergründe auf Basis von strahlenhärtbaren Harzen, monofunktionellen Reaktiwerdünnern und sauren Haftvermittlern. Die eingesetzten Harze sind dabei Verkaufsware verschiedener Anbieter und werden nicht für diesen Einsatz speziell angepasst. Insbesondere werden keine zusätzlichen funktionellen Gruppen der strahlenhärtenden Harze erwähnt.

Auch EP 902 040 beinhaltet strahlenhärtbare Formulierungen. Darin werden Urethan(meth)acrylate mit monofunktionellen Estern einer ungesättigten Carbonsäure beschrieben, welche mit Alkoholen verestert sind, die einen Carbocyclus oder einen Heterocyclus enthalten. Auf eine besondere Funktionalität der Urethanacrylate wird hier nicht eingegangen.

Aufgabe war es, strahlenhärtbare Formulierungen zu finden, die einerseits nach der Beschichtung gut verformbar, d. h. flexibel sind, andererseits aber auch einen hervorragenden Korrosionsschutz für Metalluntergründe gewährleisten.

Überraschend wurde gefunden, dass die Korrosionsfestigkeit von Lacken auf Basis einer strahlenhärtbaren Formulierung auf metallischen Untergründen ansteigt, wenn die eingesetzten strahlenhärtbaren Harze über freie OH-Gruppen verfügen.

Gegenstand der vorliegenden Erfindung ist eine strahlenhärtbare Formulierung gemäß Anspruch 1 bestehend aus
A) mindestens einem strahlenhärtbaren Polymer mit einer OH-Zahl ≥ 10 mg KOH/g ausgewählt aus der Gruppe der Urethan(meth)acrylate, Polyester(meth)acrylate, Polyether(meth)acrylate, Polycarbonat(meth)acrylate und/oder Poly(meth)acrylat(meth)acrylate, und
B) mindestens einem monofunktionellem strahlenhärtbaren Reaktivverdünner,
C) mindestens einem sauren Haftvermittlern,
D) optional Photoinitiatoren,
E) optional mehrfachfunktionellen Reaktivverdünnern,
F) optional anderen strahlenhärtbaren Harzen,
G) optional Pigmenten und sonstige Zuschlagstoffen.

Der Begriff (Meth)acrylate schließt sowohl Methacrylate wie auch Acrylate ein.

Die Herstellung strahlenhärtbarer Harze wird beschrieben z. B. in "Radiation Curing in Polymer Science & Technology, Vol I: Fundamentals and Methods" von J. P. Fouassier, J. F. Rabek, Elsevier Applied Science, London und New York, 1993, Chapter 5, Seiten 226 bis 236, in "Lackharze", D. Stoye, W. Freitag, Hanser-Verlag, Wien, 1996 und in der EP 0 947 565.

Die erfindungsgemäß eingesetzten strahlenhärtbaren Polymere A) weisen eine OH-Zahl von mindestens 10 mg KOH/g, bevorzugt von 10 bis 50 mg KOH/g, besonders bevorzugt von 10 bis 25 mg KOH/g, auf. Das Molgewicht beträgt zwischen 500 und 15000 g/Mol.

Besonders geeignet sind Urethan(meth)acrylate, da sie in Hinblick auf Mechanik und Wetterstabilität besonders gute Eigenschaften aufweisen. Urethan(meth)acrylate werden beschrieben z. B. in der US 5,719,227.

Urethan(meth)acrylate werden aus hydroxylgruppenhaltigen Polymeren durch Umsetzung mit Polyisocyanaten und einer Verbindung, die gleichzeitig mindestens eine gegenüber Isocyanat reaktiven Gruppe (z. B. Alkohol, Amin oder Thiol) und mindestens eine polymerisationsfähige Acrylatgruppe enthält, hergestellt. Sie weisen ebenso Urethangruppen wie Acrylatgruppen auf.

Als hydroxylgruppenhaltige Polymere kommen vor allem Polyester, Polyether, Polycarbonate und Polyacrylate infrage. Polyester werden aufgrund der Materialeigenschaften und der Anwendungsbreite bevorzugt.

Hydroxylgruppenhaltige Polyester werden hergestellt durch Polykondensation von geeigneten Dicarbonsäuren und Diolen. Die Kondensation erfolgt auf an sich bekannte Weise in einer Inertgas-Atmosphäre bei Temperaturen von 100 bis 260 °C, vorzugsweise 130 bis 220 °C, in der Schmelze oder in azeotroper Fahrweise, wie es z. B. in Methoden der Organischen Chemie (Houben-Weyl); Band 14/2, Seiten 1 bis 5, 21 bis 23, 40 bis 44, Georg Thieme Verlag, Stuttgart, 1963, oder bei C. R. Martens, Alkyd Resins, Seiten 51 bis 59, Reinhold Plastics Appl. Series, Reinhold Publishing Comp., New York, 1961, beschrieben ist. Die für die Herstellung von Polyestern bevorzugten Carbonsäuren können aliphatischer, cycloaliphatischer, aromatischer und/oder heterocyclischer Natur sein und gegebenenfalls durch Halogenatome substituiert und/oder ungesättigt sein. Als Beispiele hierfür seien genannt: Bernstein-, Adipin-, Kork-, Azelain, Sebacin-, Phthal-, Terephthal-, Isophthal-, Trimellit-, Pyromellit-, Tetrahydrophthal-, Hexahydrophthal-, Hexahydroterephthal-, Di- und Tetrachlorphthal-, Endomethylen-tetrahydrophthal-, Glutarsäure, 1,4-Cyclohexandicarbonsäure bzw. - soweit zugänglich - deren Anhydride oder Ester. Besonders gut geeignet sind Isophthalsäure, Terephthalsäure, Hexahydroterephthalsäure und 1,4-Cyclohexan-dicarbonsäure.

Als Polyole kommen z. B. Monoethylenglykol, 1,2- und 1,3-Propylenglykol, 1,4- und 2,3-Butylenglykol, Di-β-hydroxyethylbutandiol, 1,5-Pentandiol, 1,6-Hexandiol, 1,8-Octandiol, Decandiol, Dodecandiol, Neopentylglykol, Cyclohexandiol, 3(4),8(9)-Bis(hydroxymethyl)-tricyclo[5.2.1.0^{2,6}]decan (Dicidol), 1,4-Bis-(hydroxymethyl)-cyclohexan, 2,2-Bis-(4-hydroxycyclohexyl)-propan, 2,2-Bis-[4-(β-hydroxyethoxy)-phenyl]-propan, 2-Methyl-propandiol-1,3, 2-Methyl-pentandiol-1,5, 2,2,4(2,4,4)-Trimethylhexandiol-1,6, Glycerin, Trimethylolpropan, Trimethylolethan, Hexantriol-1,2,6, Butantriol-1,2,4, Tris-(β-hydroxyethyl)-isocyanurat, Pentaerythrit, Mannit und Sorbit sowie Diethylenglykol, Triethylenglykol, Tetraethylenglykol, Dipropylenglykol, Polypropylenglykole, Polybutylenglykole, Xylylenglykol und Hydroxypivalinsäureneopentylglykolester, infrage. Bevorzugt sind Monoethylenglykol, Neopentylglykol, Dicidol, Cyclohexandimethanol, Trimethylolpropan und Glycerin.

So hergestellte Polyester haben eine OH-Zahl von 15 bis 750 mg KOH/g. Es können auch Gemische von Polyestern eingesetzt werden.

Für die Herstellung von Urethanacrylaten werden als Polyisocyanate Diisocyanate aliphatischer, (cyclo)aliphatischer oder cycloaliphatischer Struktur eingesetzt. Repräsentative Beispiele der Polyisocyanate sind 2-Methylpentamethylen-1,5-diisocyanat (MPDI), Hexamethylendiisocyanat (HDI), Trimethylhexamethylen-1,6-diisocyanat (TMDI), insbesondere das 2,2,4- und das 2,4,4-Isomere und technische Gemische beider Isomere, 4,4'-Methylen-bis(cyclohexylisocyanat) (H₁₂MDI), Norbornandiisocyanat (NBDI), und 3,3,5-Trimethyl-1-isocyanato-3-isocyanatomethylcyclohexan (IPDI). Ebenfalls gut geeignet sind auch Polyisocyanate, die durch Umsetzung von Polyisocyanaten mit sich selbst über Isocyanatgruppen erhältlich sind, wie Isocyanurate, die durch Reaktion dreier Isocyanatgruppen entstehen. Die Polyisocyanate können ebenfalls Biuret- oder Allophanatgruppen enthalten. Besonders gut geeignet ist IPDI und/oder IPDI-Trimer.

Als polymerisationsfähige Verbindungen mit mindestens einer freien OH-Gruppe und einer polymerisationsfähigen (Meth)acrylatgruppe kommen z. B. Hydroxyethyl(meth)acrylat (HEA bzw. HEMA), Hydroxypropyl(meth)acrylat, Hydroxybutyl(meth)acrylat und Glycerindi(meth)acrylat in Frage. Besonders gut geeignet ist Hydroxyethylacrylat (HEA).

Zur Herstellung des Urethanacrylates aus den OH-haltigen Polymeren, Polyisocyanaten und der acrylathaltigen Komponente wird zunächst das Polyisocyanat vorgelegt, mit einem geeigneten Katalysator (z. B. DBTL) und einem Polymerisationsinhibitor (z. B. IONOL CP, Shell) versetzt und in einem Verhältnis NCO:OH von 2,5 bis 1 : 1 die acrylathaltigen Komponente, z. B. Hydroxyethylacrylat zugegeben. Danach wird zum Reaktionsprodukt der Polyester im Verhältnis Rest-NCO : OH von 0,5 bis 0,95 : 1 gegeben und die Reaktion bei 40 bis 120 °C vervollständigt, so dass ein NCO-Gehalt unter 0,1 % erreicht wird und die OH-Zahl dieses Produktes mindestens 10 mg KOH/g beträgt.

Die Umsetzung von hydroxylgruppenhaltigen Polymeren mit (Meth)Acrylsäure bzw. deren Ester wird beschrieben z. B. in DE 39 22 875 oder auch in US 6,090,866. Im Allgemeinen werden dazu die Polymere mit oder ohne Lösemittel mit (Meth)acrylsäure bzw. deren Ester in Anwesenheit eines Polymerisationsinhibitors und eines (meist sauren) Katalysators auf Temperaturen zwischen 80 und 160 °C aufgeheizt, wobei das durch die Veresterung (bzw. Umesterung) entstehende Reaktionswasser (bzw. Alkohol) abdestilliert wird. Nach Beendigung des gewünschten Umsatzes kann die restliche (Meth)acrylsäure (bzw. deren Ester) bei geringeren Temperaturen im Vakuum abgetrennt werden. Erfindungsgemäß wird die Reaktion beendet, bevor die OH-Zahl des entstehenden Produktes unter 10 sinkt und die Reaktionsmischung wie oben beschrieben aufgearbeitet.

Die Herstellung von Polyethern wird beschrieben z. B. in Stoye, Freitag, Lackharze, Carl-Hanser Verlag, S. 206, 207. Solche Polyether sind käuflich zu erwerben unter den Handelsnamen Lupranol (BASF), Desmophen U (Bayer), Voranol (DOW), Sovermol (Henkel), Poly-THF (BASF) und Terathane (DuPont).

Die Herstellung von Polycarbonaten wird in z. B. Stoye, Freitag, Lackharze, Carl-Hanser Verlag, Seiten 103, 104 beschrieben. Handelsprodukte sind z. B. Poly THF CD (BASF), Desmophen C200 (Bayer).

Die Herstellung von Poly(meth)acrylaten wird z. B. in Stoye, Freitag, Lackharze, Carl-Hanser Verlag, Seiten 316 bis 320 beschrieben. Handelsprodukte sind z. B. Acronal, Luprenal (BASF), Acryloid (Rohm & Haas), Desmophen A (Bayer), Joncryl (Johnson), Plexigum, Plexisol (Röhm) und viele andere.

Die Menge A) in der Formulierung variiert von 5 bis 95 Gew.-%, bevorzugt 10 bis 39 Gew.-%.

Strahlenhärtbare monofunktionelle Reaktivverdünner B) und ihre Herstellung werden z. B. beschrieben in "Radiation Curing in Polymer Science & Technology, Vol I: Fundamentals and Methods" von J. P. Fouassier, J. F. Rabek , Elsevier Applied Science, London und New York, 1993, Chapter 5, Seiten 237 bis 240. Es handelt sich dabei in der Regel um Acrylat oder Methacrylat haltige Stoffe, die bei Raumtemperatur flüssig sind und damit in der Lage, die Gesamtviskosität der Formulierung herabzusetzen. Beispiele für solche Produkte sind Isobornylacrylat, Hydroxypropylmethacrylat, Trimethylolpropanformalmonoacrylat, Tetrahydro-fufurylacrylat, Phenoxyethylacrylat, Laurylacrylat sowie propoxilierte oder ethoxilierte Varianten dieser Reaktivverdünner auch aber urethanisierte Reaktivverdünner wie Ebecryl 1039 (Cytec) und andere. Außerdem in Frage kommen auch andere flüssige Komponenten, die in der Lage sind unter Bedingungen der radikalischen Polymerisation mit zu reagieren, wie z. B. Vinylether oder Allylether.

Die Menge an B) in der Formulierung beträgt 5 bis 90 Gew.-%, bevorzugt von 30 bis 61 Gew.-%.

Haftvermittler C) für strahlenhärtbare Formulierungen für metallische Untergründe bestehen aus Phosphorsäure oder Phosphonsäure oder deren Umsetzungsprodukten (z. B. Ester) mit funktionalisierten Acrylaten. Während die freien Phosphorsäuregruppen für die direkte Haftung auf dem Metall verantwortlich sind, sorgen die Acrylatgruppen für einen Verbund mit der Beschichtungsmatrix. Solche Produkte werden auch beschrieben in WO 01/98413, in JP 08231564, und in JP 06313127.

Typische Handelsprodukte sind EBECRYL 169 und 170 von Cytec, ALDITOL Vxl 6219 von VIANOVA, CD 9050 und CD 9052 von Sartomer, SIPOMER PAM-100, SIPOMER PAM-200 und SIPOMER PAM-300 von Rhodia und GENORAD 40 von Rahn. Die Menge an C) in der Formulierung beträgt 0,1 bis 10 Gew.-%, bevorzugt von 0,5 bis 5 Gew.-%.

Photoinitiatoren D) und ihre Herstellung werden beschrieben z. B. in "Radiation Curing in Polymer Science & Technology, Vol II: Photoinitiating Systems" von J. P. Fouassier, J. F. Rabek , Elsevier Applied Science, London und New York, 1993. Photoinitiatoren können in Mengen von 0,2 bis 10 Gew.-%, bevorzugt von 1 bis 8 Gew.-% enthalten sein, falls vorhanden.

Strahlenhärtbare mehrfachfunktionelle Reaktivverdünner E) und ihre Herstellung werden z. B. beschrieben in "Radiation Curing in Polymer Science & Technology, Vol I: Fundamental and Methods" von J. P. Fouassier, J. F. Rabek , Elsevier Applied Science, London und New York, 1993, Chapter 5, Seiten 237 bis 240. Es handelt sich dabei in der Regel um acrylat- oder methacrylathaltige Stoffe, die bei Raumtemperatur flüssig sind und damit in der Lage, die Gesamtviskosität der Formulierung herabzusetzen. Beispiele für solche Produkte sind Trimethylenpropantriacrylat, Dipropylenglycoldiacrylat, Tripropylenglycoldiacrylat, Hexandioldiacrylat und Pentaerythrittetraacrylat. Die Menge an E) in der Formulierung beträgt 1 bis 50 Gew.-%, bevorzugt von 1 bis 20 Gew.-%, falls vorhanden.

Die Herstellung strahlenhärtbarer Harze F) wird beschrieben z. B. in "Radiation Curing in Polymer Science & Technology, Vol I: Fundamentals and Methods" von J. P. Fouassier, J. F. Rabek, Elsevier Applied Science, London und New York, 1993, Chapter 5, Seiten 226 bis 236, in "Lackharze", D. Stoye, W. Freitag, Hanser-Verlag, Wien, 1996 und in der EP 947 565. Die Menge an F in der Formulierung beträgt 1 bis 50 Gew.-%, bevorzugt 1-20 Gew.-%, falls vorhanden.

Geeignete Pigmente G) in strahlenhärtbaren Formulierungen werden beschrieben, z. B. in "Radiation Curing in Polymer Science & Technology, Vol IV: Practical Aspects and Application" von J. P. Fouassier, J. F. Rabek , Elsevier Applied Science, London und New York, 1993, Chapter 5, Seiten 87 bis 105 und können in Mengen von 1 bis 40 Gew.-% enthalten sein. Beispiele für Korrosionsschutzpigmente findet man z. B. in "Pigment + Füllstoff Tabellen", O. Lückert, Vincentz Verlag Hannover, 6. Auflage 2002. Beispielhaft seien genannt: SHIELDEX C 303 (Grace Davison) und HALOX Coil X 100, HALOX Coil X 200 und HALOX CW 491 (Erbslöh), HEUCOPHOS SAPP oder auch ZPA (Heubach), K-White TC 720 (Tayca) und HOMBICOR (Sachtleben). Natürlich kommen auch einfache anorganische Salze wie z. B. Zinkphosphat in Betracht.

Sonstige Zuschlagstoffe G) für strahlenhärtbare Formulierungen gibt es in verschiedenen Zusammensetzungen und für diverse Zwecke, z. B. Verlaufsmittel, Mattierungsmittel, Entgasungsmittel und andere.

Einige von Ihnen werden beschrieben in der Broschüre "SELECTED DEGUSSA PRODUCTS FOR RADIATION CURING AND PRINTING INKS", herausgegeben von der Tego Coating & Ink Additives, Essen, 2003. Die Menge an solchen Additiven variiert von 0,01 bis 5 Gew.-%, falls vorhanden.

Die Auftragung der erfindungsgemäßen strahlenhärtbaren Formulierung kann durch in der Lacktechnologie bekannte Applikationstechniken erfolgen, z. B. Rakeln, Walzen, Sprühen oder Spritzen.

Als metallischer Untergrund eignet sich vor allem Stahl, optional vorbehandelt, aber auch Aluminium und sonstige Metalle oder Legierungen, die aus Korrosionsschutzgründen mit einer Beschichtung versehen werden.

Die Aushärtung erfolgt in Anwesenheit von Photoinitiatoren unter UV-Bestrahlung oder in Abwesenheit von Photoinitiatoren unter Elektronenstrahlen. Die Eigenschaften der ausgehärteten Lacke sind weitgehend unabhängig von der Aushärtungsmethode.

UV-Härtung und UV-Lampen werden z. B. beschrieben in "Radiation Curing in Polymer Science & Technology, Vol I: fundamental and Methods" von J. P. Fouassier, J. F. Rabek, ElsevierApplied Science, London und New York, 1993, Chapter 8, Seiten 453 bis 503.

Elektronenstrahlhärtung und -härter werden z. B. beschrieben in "Radiation Curing in Polymer Science & Technology, Vol I: Fundamentals and Methods" von J. P. Fouassier, J. F. Rabek, Elsevier Applied Science, London und New York, 1993, Chapter 4, Seiten 193 bis 225 und in Chapter 9, Seiten 503 bis 555.

Gegenstand der Erfindung sind auch Beschichtungen enthaltend eine strahlenhärtbare Formulierung gemäß Anspruch 1 bestehend aus
A) mindestens einem strahlenhärtbaren Polymer mit einer OH-Zahl ≥ 10 mg KOH/g ausgewählt aus der Gruppe der Urethan(meth)acrylate, Polyester(meth)acrylate, Polyether(meth)acrylate, Polycarbonat(meth)acrylate und/oder Poly(meth)acrylat(meth)acrylate, und
B) mindestens einem monofunktionellem strahlenhärtbaren Reaktivverdünner,
C) mindestens einem sauren Haftvermittler,
D) optional Photoinitiatoren,
E) optional mehrfachfunktionellen Reaktivverdünnern,
F) optional anderen strahlenhärtbaren Harzen,
G) optional Pigmenten und sonstige Zuschlagstoffen.

Die erfindungsgemäße Beschichtung kann entweder allein verwendet werden, oder aber als Primer eines Mehrschichtaufbaus. Die über der erfindungsgemäßen Beschichtung liegenden Schichten können entweder konventionell thermisch ausgehärtet werden, oder aber auch durch Strahlung.

Nachfolgend wird die Erfindung anhand von Beispielen erläutert, ohne sie aber dadurch einzuschränken.

### Beispiele:

| **Einsatzstoffe** | **Produktbeschreibung, Hersteller** |
|---|---|
| IPDI | Isophorondiisocyanat, Degussa AG, Coatings & Colorants, NCO-Gehalt: 37,8 % |
| HEA | Hydroxyethylacrylat, Röhm |
| IBOA | Isobornylacrylat, Cytec, monofunktioneller Reaktivverdünner |
| lonol CP | Polymerisationsinhibitor, Shell |
| ADDITOL VXL 6219 | Phosphorsäurehaltiger Haftvermittler, Sartomer |
| IRGACURE 184 | Photoinitiator, Ciba |
| HDDA | Hexandioldiacrylat, Cytec, difunktioneller Reaktivverdünner |
| DBTL | Dibutylzinndilaurat |

### I. Herstellvorschrift hydroxylgruppenhaltiger Polyester P

Adipinsäure (315 g, 2,2 mol), Phthalsäureanhydrid (192 g, 1,3 mol), Isophthalsäure (143 g, 0,9 mol), Hexandiol-1,6 (231 g, 2,0 mol), Neopentylglykol (171 g, 1,6 mol) und Monoethylenglykol (96 g, 1,5 mol) werden in einem 1,5 I-Kolben mit Kolonne und Destillationsaufsatz im Stickstoffstrom aufgeschmolzen und weiter erhitzt. Bei Erreichen einer Temperatur von etwa 160 °C im Kolbensumpf beginnt Wasser abzudestillieren. Innerhalb von zwei Stunden wird die Temperatur sukzessive auf 230 °C erhöht. Nach etwa zwei weiteren Stunden bei dieser Temperatur verlangsamt sich der Destillatanfall. Es wird mit 0,2 g n-Butylzinntrioctoat versetzt und im Vakuum weiter gearbeitet, welches im Verlauf der Reaktion so angepasst wird, dass immer noch Destillat anfällt. Bei Erreichen einer Hydroxylzahl von 72 mg KOH/g und einer Säurezahl von 0,6 mg KOH/g wird abgestellt. Mittels DSC-Messung (zweite Aufheizung) wird die Glasübergangstemperatur T_{g} des Polyesters zu -38 °C bestimmt.

### II. Herstellung des IPDI-HEA Adduktes

Unter Rühren wurde zu einer Mischung aus 222,0 g (1 Mol) IPDI, 0,7 g IONOL CP und 0,4 g DBTL 116,0 g (1 Mol) Hydroxyethylacrylat zugetropft. Nach weiteren 30 min Rühren bei 60 °C lag der NCO-Gehalt bei 12,2 % und die Reaktionsmischung wurde abgekühlt.

### III. Herstellung der Urethanacrylate UA1 bis UA3

779,2 g (1 Äquiv. OH) des hydroxylgruppenhaltigen Polyesters P wurden auf 80 °C erwärmt und Portionsweise jeweils mit folgenden Mengen an IPDI-HEA Addukt aus dem Beispiel II. versetzt. Nach 2 h ist die Reaktion beendet und die NCO-Zahl < 0,1 %.
UA1: 206,6 g (0,6 Äquiv. NCO) OHZ 22,8 mg KOH/ g
UA2: 275,4 g (0,8 Äquiv. NCO) OHZ 10,6 mg KOH/ g
UA3: 344,3 g (1,0 Äquiv. NCO) OHZ 0 mg KOH/ g (Vergleichsbeispiel)

### IV. Formulierungen mit monofunktionalen Reaktivverdünnern

### (UA1-2: erfindungsgemäß; UA3 nicht erfindungsgemäßer Vergleich)

Die Urethanacrylate (UA1-UA3) wurden mit den anderen Formulierungsbestandteilen gut verrührt. Nach Zugabe der Pigmente wurde zusätzlich noch im Dispermaten 20 Minuten bei 9000 U/min dispergiert. Schließlich wurden die gebrauchsfähigen Formulierungen auf Stahlbleche, (Vorbehandelte Stahlbleche, Chemetall, Bonder 1303) aufgerakelt und nachfolgend unter einer UV-Lampe (3 m/min, Minicure, Quecksilberdampflampe, 80 W/cm, Technigraf) ausgehärtet.

Formulierung: 35 % Urethanacrylat UA1-3, 50 % IBOA, 3 % IRGACURE 184, 2 % ADDITOL VXL 6219, und 10 % Zinkphosphat.

### a) Einschichtlackierung:

Die Formulierungen IV wurden in 20 µm Schichtdicke auf Bonder 1303 Stahlbleche (Vorbehandelte Stahlbleche, Chemetall) aufgerakelt und wie beschrieben ausgehärtet. Danach wurden die Bleche einer Erichsentiefung (DIN 53 156) und einem Salzsprühtest (DIN 53167) unterzogen und nach 360 h begutachtet. Dabei ergaben sich folgende Resultate:

### Salzsprühtest

| | Erichsentiefung | Unterwanderung | |
|---|---|---|---|
| Da_UA1: | 10,0 mm | 4,9 mm | (erfindungsgemäß) |
| Da_UA2: | 10,0 mm | 4,4 mm | (erfindungsgemäß) |
| Da_UA3: | 8,5 mm | 10,1 mm | (Vergleichsbeispiel) |

Deutlich ist der positive Einfluss der zusätzlichen OH-Gruppen auf die Korrosionsfestigkeit zu erkennen.

### b) Zweischichtlackierung:

Die Formulierungen IV wurden in 5 µm Schichtdicke auf Bonder 1303 Stahlbleche (Vorbehandelte Stahlbleche, Chemetall) aufgerakelt und wie beschrieben ausgehärtet. Dann wurde eine lösemittelhaltige PUR-Decklackbeschichtung SP 31 (Degussa AG, Zusammensetzung siehe unten) aufgerakelt und bei 232 °C PMT (Peak Metal Temperature) eingebrannt. Danach wurden die Bleche einer Erichsentiefung und einem Salzsprühtest (500) h unterzogen. Dabei ergaben sich folgende Resultate:

### Salzsprühtest

| | Erichsentiefung | Unterwanderung | |
|---|---|---|---|
| Db_UA1: | 8,0 mm | 0,1 mm | (erfindungsgemäß) |
| Db_UA2: | 7,5 mm | 0,3 mm | (erfindungsgemäß) |
| Db_UA3: | 7,5 mm | 0,7 mm | (Vergleichsbeispiel) |

Deutlich ist der positive Einfluss der zusätzlichen OH-Gruppen auf die Korrosionsfestigkeit zu erkennen.

Alle unter IV getesteten ausgehärteten Filme hatten eine Erichsentiefung von mindestens 5 mm, sind also für übliche Anwendungen flexibel genug.

Richtformulierung für lösemittelhaltige Decklacke auf Polyurethanbasis SP 31:

| | |
|---|---|
| 35,6 | DYNAPOL LH 748-02 (Degussa AG) |
| 0,2 | AEROSIL 200 (Degussa AG) |
| 28,5 | Titandioxid 2310 (Kronos) |
| 4,0 | DBE (Dibasicester, Lacklösemittel) |
| 4,0 | Butyldiglykolacetat |

Perlmühle, Mahlfeinheit der Pigmente 10 bis 12 µm

| | |
|---|---|
| 3,5 | ACEMATT OK 500 (Degussa AG) |
| | |
| 3,0 | DYNAPOL LH 748-02 (Degussa AG) |
| 1,1 | DISPARLON 1983 / 50 % in SN 200 (Erbslöh) |
| 0,5 | VESTICOAT Katalysator C 31 (Degussa AG) |
| 9,4 | DESMODUR BL 3175 (Bayer) |
| 4,2 | Butylglykol |
| 6,0 | Butyldiglykolacetat |

### 100 Teile

### Einbrennbedingungen

| | |
|---|---|
| Einbrenndauer : | 30 sek. |
| PMT : | 232°C |
| Schichtstärke (µm) : | ca. 20 µm |

### V Formulierung ohne monofunktionelle Reaktivverdünner (nicht erfindungsgemäße Vergleichsbeispiele)

Die Urethanacrylate (UA1-UA3) wurden mit den anderen Formulierungsbestandteilen gut verrührt. Nach Zugabe der Pigmente wurde zusätzlich noch im Dispermaten 20 Minuten bei 9000 U/min dispergiert. Schließlich wurden die gebrauchsfähigen Formulierungen mit einer Schichtdicke von 20 µm auf Stahlbleche (Vorbehandelte Stahlbleche, Chemetall, Bonder 1303) aufgerakelt und nachfolgend unter einer UV-Lampe (3 m/min, Minicure, Quecksilberdampflampe, 80 W/cm, Technigraf) ausgehärtet.

Formulierung: 35 % Urethanacrylat UA1-3, 50 % HDDA, 3 % IRGACURE 184, 2 % ADDITOL VXL 6219, und 10 % Zinkphosphat.

| | Erichsentiefung | |
|---|---|---|
| E_UA1: | 3,5 mm | (Vergleichsbeispiel) |
| E_UA2: | 3,2 mm | (Vergleichsbeispiel) |
| E_UA3: | 2,4 mm | (Vergleichsbeispiel) |

Die Erichsentiefung aller drei Vergleichs-Formulierungen war kleiner als 5 mm. Damit sind diese Filme ohne monofunktionelle Reaktivverdünnern nicht flexibel genug für übliche Anwendungen.

## Patentansprüche

1. Strahlenhärtbare Formulierung bestehend aus
A) mindestens einem strahlenhärtbaren Polymer mit einer OH-Zahl ≥ 10 mg KOH/g ausgewählt aus der Gruppe der Urethan(meth)acrylate, Polyester(meth)acrylate, Polyether(meth)acrylate, Polycarbonat(meth)acrylate und/oder Poly(meth)acrylat(meth)acrylate, und
B) mindestens einem monofunktionellem strahlenhärtbaren Reaktivverdünner,
C) mindestens einem sauren Haftvermittler, ausgewählt aus Phosphorsäure oder Phosphonsäure oder deren Umsetzungsprodukten mit funktionalisierten Acrylaten,
D) optional Photoinitiatoren,
E) optional mehrfachfunktionellen Reaktivverdünnern,
F) optional anderen strahlenhärtbaren Harzen,
G) optional Pigmenten und sonstige Zuschlagstoffen.

2. Strahlenhärtbare Formulierung nach Anspruch 1,
**dadurch gekennzeichnet,**
**dass** die Komponente A) eine OH-Zahl von 10 bis 50 mg KOH/g und eine Molmasse von 500 bis 15000 g/Mol aufweist.

3. Strahlenhärtbare Formulierung nach mindestens einem der vorherigen Ansprüche,
**dadurch gekennzeichnet,**
**dass** als Komponente A) Urethanacrylate enthalten sind.

4. Strahlenhärtbare Formulierung nach mindestens einem der vorherigen Ansprüche,
**dadurch gekennzeichnet,**
**dass** Urethan(meth)acrylate erhalten aus hydroxylgruppenhaltigen Polymeren durch Umsetzung mit Polyisocyanaten und einer Verbindung, die gleichzeitig mindestens eine gegenüber Isocyanat reaktiven Gruppe und mindestens eine polymerisationsfähige Acrylatgruppe enthält, als Komponente A) enthalten sind.

5. Strahlenhärtbare Formulierung nach mindestens einem der vorherigen Ansprüche,
**dadurch gekennzeichnet,**
**dass** als hydroxylgruppenhaltige Polymere Polyester, Polyether, Polycarbonate und Polyacrylate eingesetzt werden.

6. Strahlenhärtbare Formulierung nach mindestens einem der vorherigen Ansprüche,
**dadurch gekennzeichnet,**
**dass** als Carbonsäuren für den Polyester Bernstein-, Adipin-, Kork-, Azelain, Sebacin-, Phthal-, Terephthal-, Isophthal-, Trimellit-, Pyromellit-, Tetrahydrophthal-, Hexahydrophthal-, Hexahydroterephthal-, Di- und Tetrachlorphthal-, Endomethylentetrahydrophthal-, Glutarsäure, 1,4-Cyclohexandicarbonsäure und/oder - soweit zugänglich - deren Anhydride oder Ester eingesetzt werden.

7. Strahlenhärtbare Formulierung nach mindestens einem der vorherigen Ansprüche,
**dadurch gekennzeichnet,**
**dass** als Polyole für den Polyester Monoethylenglykol, 1,2-Propylenglycol, 1,3-Propylenglykol, 1,4-Butylenglykol, 2,3-Butylenglykol, Di-β-hydroxyethylbutandiol, 1,5-Pentandiol, 1,6-Hexandiol, 1,8-Octandiol, Decandiol, Dodecandiol, Neopentylglykol, Cyclohexandiol, 3(4),8(9)-Bis(hydroxymethyl)-tricyclo[5.2.1.0^{2,6}]decan (Dicidol), Bis-(1,4-hydroxymethylrcyclohexan, 2,2-Bis-(4-hydroxycyclohexyl)-propan, 2,2-Bis-[4-(β-hydroxyethoxy)-phenyl]-propan, 2-Methyl-propandiol-1,3, 2-Methyl-pentandiol-1,5, 2,2,4(2,4,4)-Trimethylhexandiol-1,6, Glycerin, Trimethylolpropan, Trimethylolethan, Hexantriol-1,2,6, Butantriol-1,2,4, Tris-(β-hydroxyethyl)-isocyanurat, Pentaerythrit, Mannit und Sorbit, Diethylenglykol, Triethylenglykol, Tetraethylenglykol, Dipropylen-glykol, Polypropylenglykole, Polybutylenglykole, Xylylenglykol und/oder Hydroxypivalinsäureneopentylglykolester eingesetzt werden.

8. Strahlenhärtbare Formulierung nach mindestens einem der vorherigen Ansprüche,
**dadurch gekennzeichnet,**
**dass** als Di- und/oder Polyisocyanate 2-Methylpentamethylen-1,5-diisocyanat (MPDI), Hexamethylendiisocyanat (HDI), Trimethylhexamethylen-1,6-diisocyanat (TMDI), insbesondere das 2,2,4- und das 2,4,4-Isomere und technische Gemische beider Isomere, 4,4'-Methylen-bis(cyclohexylisocyanat) (H₁₂MDI), Norbomandiisocyanat (NBDI), und 3,3,5-Trimethyl-1-isocyanato-3-isocyanatomethylcyclohexan (IPDI), allein oder in Mischungen, eingesetzt werden.

9. Strahlenhärtbare Formulierung nach mindestens einem der vorherigen Ansprüche,
**dadurch gekennzeichnet,**
**dass** Isocyanurate eingesetzt werden.

10. Strahlenhärtbare Formulierung nach mindestens einem der vorherigen Ansprüche,
**dadurch gekennzeichnet,**
**dass** als polymerisationsfähige Verbindungen mit mindestens einer freien OH-Gruppe und einer polymerisationsfähigen (Meth)acrylatgruppe Hydroxyethyl(meth)acrylat (HEA bzw. HEMA), Hydroxypropyl(meth)acrylat, Hydroxybutyl(meth)acrylat und/oder Glycerindi(meth)acrylat eingesetzt werden.

11. Strahlenhärtbare Formulierung nach mindestens einem der vorherigen Ansprüche,
**dadurch gekennzeichnet,**
**dass** die Menge A) in der Formulierung von 5 bis 95 Gew.-%, bevorzugt 10 bis 39 Gew.-%, variiert.

12. Strahlenhärtbare Formulierung nach mindestens einem der vorherigen Ansprüche,
**dadurch gekennzeichnet,**
**dass** als Komponente B) Isobornylacrylat, Hydroxypropylmethacrylat, Trimethylolpropanformalmonoacrylat, Tetrahydro-fufurylacrylat, Phenoxyethylacrylat, Laurylacrylat sowie propoxilierte oder ethoxilierte Varianten dieser Reaktivverdünner, urethanisierte Reaktivverdünner, Vinylether oder Allylether, allein oder in Mischungen, enthalten sind, in Mengen von 5 bis 90 Gew.-%, bevorzugt von 30 bis 61 Gew.-%.

13. Strahlenhärtbare Formulierung nach mindestens einem der vorherigen Ansprüche,
**dadurch gekennzeichnet,**
**dass** Komponente C) in Mengen von 0,1 bis 10 Gew.-%, bevorzugt von 0,5 bis 5 Gew.-%. enthalten ist.

14. Strahlenhärtbare Formulierung nach mindestens einem der vorherigen Ansprüche,
**dadurch gekennzeichnet,**
**dass** Photoinitiatoren D) in Mengen von 0,1 bis 10 Gew.%, bevorzugt von 1 bis 8 Gew.%, enthalten sind.

15. Strahlenhärtbare Formulierung nach mindestens einem der vorherigen Ansprüche,
**dadurch gekennzeichnet,**
**dass** als Komponente E) Trimethylenpropantriacrylat, Dipropylenglycoldiacrylat, Tripropylenglycoldiacrylat, Hexandioldiacrylat und Pentaerythrittetraacrylat eingesetzt sind, in Mengen von 1 bis 50 Gew.-%, bevorzugt von 1 bis 20 Gew.-%.

16. Beschichtungen, enthaltend eine strahlenhärtbare Formulierung bestehend aus
A) mindestens einem strahlenhärtbaren Polymer mit einer OH-Zahl ≥ 10 mg KOH/g ausgewählt aus der Gruppe der Urethan(meth)acrylate, Polyester(meth)acrylate, Polyether(meth)acrylate, Polycarbonat(meth)acrylate und/oder Poly(meth)acrylat(meth)acrylate, und
B) mindestens einem monofunktionellem strahlenhärtbaren Reaktivverdünner,
C) mindestens einem sauren Haftvermittlern, ausgewählt aus Phosphorsäure oder Phosphonsäure oder deren Umsetzungsprodukten mit funktionalisierten Acrylaten
D) optional Photoinitiatoren,
E) optional mehrfachfunktionellen Reaktiwerdünnem,
F) optional anderen strahlenhärtbaren Harzen,
G) optional Pigmenten und sonstige Zuschlagstoffen.

## Claims

1. Radiation-curable formulation composed of
A) at least one radiation-curable polymer having an OH numbers ≥ 10 mg KOH/g, selected from the group of urethane (meth)acrylates, polyester (meth)-acrylates, polyether (meth)acrylates, polycarbonate (meth)acrylates and/or poly(meth)acrylate (meth)acrylates, and
B) at least one monofunctional radiation-curable reactive diluent,
C) at least one acidic adhesion promoter selected from phosphoric acid or phosphonic acid or their reaction products with functionalized acrylates,
D) optionally photoinitiators,
E) optionally polyfunctional reactive diluents,
F) optionally other radiation-curable resins,
G) optionally pigments and other adjuvants.

2. Radiation-curable formulation according to Claim 1, **characterized in that** component A) has an OH number from 10 to 50 mg KOH/g and a molar mass from 500 to 15 000 g/mol.

3. Radiation-curable formulation according to at least one of the preceding claims, **characterized in that** urethane acrylates are present as component A).

4. Radiation-curable formulation according to at least one of the preceding claims, **characterized in that** urethane (meth)acrylates obtained from hydroxyl-containing polymers by reaction with polyisocyanates and with a compound which at one and the same time contains at least one isocyanate-reactive group and at least one polymerizable acrylate group are present as component A).

5. Radiation-curable formulation according to at least one of the preceding claims, **characterized in that** polyesters, polyethers, polycarbonates, and polyacrylates are used as hydroxyl-containing polymers.

6. Radiation-curable formulation according to at least one of the preceding claims, **characterized in that** succinic, adipic, suberic, azelaic, sebacic, phthalic, terephthalic, isophthalic, trimellitic, pyromellitic, tetrahydrophthalic, hexahydrophthalic, hexahydroterephthalic, dichlorophthalic and tetrachlorophthalic, endomethylene tetrahydrophthalic, and glutaric acid, 1,4-cyclohexanedicarboxylic acid, and/or - where available - their anhydrides or esters are used as carboxylic acids for the polyester.

7. Radiation-curable formulation according to at least one of the preceding claims, **characterized in that** monoethylene glycol, 1,2-propylene glycol, 1,3-propylene glycol, 1,4-butylene glycol, 2,3-butylene glycol, di-(3-hydroxyethylbutanediol, 1,5-pentanediol, 1,6-hexanediol, 1,8-octanediol, decanediol, dodecanediol, neopentyl glycol, cyclohexanediol, 3(4),8(9)-bis(hydroxymethyl)-tricyclo[5.2.1.0^{2,6}]decane (Dicidol), bis(1,4-hydroxymethyl)cyclohexane, 2,2-bis(4-hydroxycyclohexyl) propane, 2,2-bis[4-(β-hydroxyethoxy)phenyl]-propane, 2-methylpropane-1,3-diol, 2-methylpentane-1,5-diol, 2,2,4(2,4,4)-trimethyl-hexane-1,6-diol, glycerol, trimethylolpropane, trimethylolethane, hexane-1,2,6-triol, butane-1,2,4-triol, tris(β-hydroxyethyl)isocyanurate, pentaerythritol, mannitol, and sorbitol, and also diethylene glycol, triethylene glycol, tetraethylene glycol, dipropylene glycol, polypropylene glycols, polybutylene glycols, xylylene glycol and/or neopentyl glycol hydroxypivalate are used as polyols for the polyester.

8. Radiation-curable formulation according to at least one of the preceding claims, **characterized in that** 2-methylpentamethylene 1,5-diisocyanate (MPDI), hexamethylene diisocyanate (HDI), trimethylhexamethylene 1,6-diisocyanate (TMDI), especially the 2,2,4 and the 2,4,4 isomer and technical mixtures of both isomers, 4,4'-methylenebis(cyclohexyl isocyanate) (H₁₂MDI), norbornane diisocyanate (NBDI), and 3,3,5-trimethyl-1-isocyanato-3-isocyanatomethylcyclohexane (IPDI), alone or in mixtures, are used as di- and/or polyisocyanates.

9. Radiation-curable formulation according to at least one of the preceding claims, **characterized in that** isocyanurates are used.

10. Radiation-curable formulation according to at least one of the preceding claims, **characterized in that** hydroxyethyl (meth)acrylate (HEA or HEMA, respectively), hydroxypropyl (meth)acrylate, hydroxybutyl (meth)acrylate, and glycerol di(meth)acrylate are used as polymerizable compounds having at least one free OH group and a polymerizable (meth)acrylate group.

11. Radiation-curable formulation according to at least one of the preceding claims, **characterized in that** the amount of A) in the formulation varies from 5% to 95% by weight, preferably 10% to 39% by weight.

12. Radiation-curable formulation according to at least one of the preceding claims, **characterized in that** isobornyl acrylate, hydroxypropyl methacrylate, trimethylolpropane formal monoacrylate, tetrahydrofurfuryl acrylate, phenoxyethyl acrylate, lauryl acrylate, and propoxylated or ethoxylated variants of these reactive diluents, urethanized reactive diluents, vinyl ethers or allyl ethers, alone or in mixtures, are present as component B) in amounts from 5% to 90% by weight, preferably from 30% to 61% by weight.

13. Radiation-curable formulation according to at least one of the preceding claims, **characterized in that** component C) is present in amounts from 0.1 to 10% by weight, preferably from 0.5% to 5% by weight.

14. Radiation-curable formulation according to at least one of the preceding claims, **characterized in that** photoinitiators D) are present in amounts from 0.1% to 10% by weight, preferably from 1% to 8% by weight.

15. Radiation-curable formulation according to at least one of the preceding claims, **characterized in that** trimethylenepropane triacrylate, dipropylene glycol diacrylate, tripropylene glycol diacrylate, hexanediol diacrylate, and pentaerythritol tetraacrylate are used as component E) in amounts from 1% to 50% by weight, preferably from 1% to 20% by weight.

16. Coatings comprising a radiation-curable formulation composed of
A) at least one radiation-curable polymer having an OH numbers 10 mg KOH/g, selected from the group of urethane (meth)acrylates, polyester (meth)-acrylates, polyether (meth)acrylates, polycarbonate (meth)acrylates and/or poly-(meth)acrylate (meth)acrylates, and
B) at least one monofunctional radiation-curable reactive diluent,
C) at least one acidic adhesion promoter selected from phosphoric acid or phosphonic acid or their reaction products with functionalized acrylates,
D) optionally photoinitiators,
E) optionally polyfunctional reactive diluents,
F) optionally other radiation-curable resins,
G) optionally pigments and other adjuvants.

## Revendications

1. Formulation durcissable par rayonnement, constituée par
A) au moins un polymère durcissable par rayonnement ayant un indice OH ≥ 10 mg de KOH/g choisi dans le groupe constitué par les (méth)acrylates d'uréthane, les (méth)acrylates de polyester, les (méth)acrylates de polyéther, les (méth)acrylates de polycarbonate et/ou les (méth)acrylates de poly(méth)acrylate, et
B) au moins un diluant réactif monofonctionnel durcissable par rayonnement,
C) au moins un promoteur d'adhésion acide, choisi parmi l'acide phosphorique ou l'acide phosphonique ou leurs produits de réaction avec des acrylates fonctionnalisés,
D) éventuellement des photoinitiateurs,
E) éventuellement des diluants réactifs polyfonctionnels,
F) éventuellement d'autres résines durcissables par rayonnement,
G) éventuellement des pigments et d'autres additifs.

2. Formulation durcissable par rayonnement selon la revendication 1, **caractérisée en ce que** le composant A) présente un indice OH de 10 à 50 mg de KOH/g et une masse molaire de 500 à 15 000 g/mol.

3. Formulation durcissable par rayonnement selon au moins l'une quelconque des revendications précédentes, **caractérisée en ce que** des acrylates d'uréthane sont contenus en tant que composant A).

4. Formulation durcissable par rayonnement selon au moins l'une quelconque des revendications précédentes, **caractérisée en ce que** des (méth)acrylates d'uréthane obtenus à partir de polymères contenant des groupes hydroxyle par mise en réaction avec des polyisocyanates et un composé qui contient simultanément au moins un groupe réactif avec les isocyanates et au moins un groupe acrylate polymérisable sont contenus en tant que composant A) .

5. Formulation durcissable par rayonnement selon au moins l'une quelconque des revendications précédentes, **caractérisée en ce que** des polyesters, des polyéthers, des polycarbonates et des polyacrylates sont utilisés en tant que polymères contenant des groupes hydroxyle.

6. Formulation durcissable par rayonnement selon au moins l'une quelconque des revendications précédentes, **caractérisée en ce que** l'acide succinique, l'acide adipique, l'acide subérique, l'acide azélaïque, l'acide sébacique, l'acide phtalique, l'acide téréphtalique, l'acide isophtalique, l'acide triméllitique, l'acide pyroméllitique, l'acide tétrahydrophtalique, l'acide hexahydrophtalique, l'acide hexahydrotéréphtalique, l'acide di- et tétrachlorophtalique, l'acide endométhylènetétrahydrophtalique, l'acide glutarique, l'acide 1,4-cyclohexanedicarboxylique et/ou, dans la mesure du possible, leurs anhydrides ou esters, sont utilisés en tant qu'acides carboxyliques pour le polyester.

7. Formulation durcissable par rayonnement selon au moins l'une quelconque des revendications précédentes, **caractérisée en ce que** le monoéthylèneglycol, le 1,2-propylèneglycol, le 1,3-propylèneglycol, le 1,4-butylèneglycol, le 2,3-butylèneglycol, le di-β-hydroxyéthylbutanediol, le 1,5-pentanediol, le 1,6-hexanediol, le 1,8-octanediol, le décanediol, le dodécanediol, le néopentylglycol, le cyclohexanediol, le 3(4),8(9)-bis(hydroxyméthyl)-tricyclo[5.2.1.0^{2,6}]décane (dicidol) , le bis-(1,4-hydroxyméthyl)-cyclohexane, le 2,2-bis-(4-hydroxycyclohexyl)-propane, le 2,2-bis-[4-(β-hydroxyéthoxy)-phényl]-propane, le 2-méthylpropanediol-1,3, le 2-méthyl-pentanediol-1,5, le 2,2,4(2,4,4)-triméthyl-hexanediol-1,6, la glycérine, le triméthylolpropane, le triméthyloléthane, l'hexanetriol-1,2,6, le butanetriol-1,2,4, l'isocyanurate de tris-(β-hydroxyéthyle), la pentaérythrite, le mannitol et le sorbitol, le diéthylèneglycol, le triéthylèneglycol, le tétraéthylèneglycol, le dipropylèneglycol, les polypropylèneglycols, les polybutylèneglycols, le xylylèneglycol et/ou l'ester néopentylglycolique de l'acide hydroxypivalique sont utilisés en tant que polyols pour le polyester.

8. Formulation durcissable par rayonnement selon au moins l'une quelconque des revendications précédentes, **caractérisée en ce que** le 1,5-diisocyanate de 2-méthylpentaméthylène (MPDI), le diisocyanate d'hexaméthylène (HDI), le 1,6-diisocyanate de triméthylhexaméthylène (TMDI), notamment l'isomère 2,2,4 et l'isomère 2,4,4 et les mélanges techniques des deux isomères, le bis(cyclohexylisocyanate) de 4,4'-méthylène (H₁₂MDI), le diisocyanate de norbornane (NBDI) et le 3,3,5-triméthyl-1-isocyanato-3-isocyanatométhylcyclohexane (IPDI), seuls ou en mélanges, sont utilisés en tant que di- et/ou polyisocyanates.

9. Formulation durcissable par rayonnement selon au moins l'une quelconque des revendications précédentes, **caractérisée en ce que** des isocyanurates sont utilisés.

10. Formulation durcissable par rayonnement selon au moins l'une quelconque des revendications précédentes, **caractérisée en ce que** le (méth)acrylate d'hydroxyéthyle (HEA ou HEMA), le (méth)acrylate d'hydroxypropyle, le (méth)acrylate d'hydroxybutyle et/ou le di(méth)acrylate de glycérine sont utilisés en tant que composés polymérisables comprenant au moins un groupe OH libre et un groupe (méth)acrylate polymérisable.

11. Formulation durcissable par rayonnement selon au moins l'une quelconque des revendications précédentes, **caractérisée en ce que** la quantité de A) dans la formulation varie de 5 à 95 % en poids, de préférence de 10 à 39 % en poids.

12. Formulation durcissable par rayonnement selon au moins l'une quelconque des revendications précédentes, **caractérisée en ce que** l'acrylate d'isobornyle, le méthacrylate d'hydroxypropyle, le monoacrylate de triméthylolpropaneformal, l'acrylate de tétrahydrofurfuryle, l'acrylate de phénoxyéthyle, l'acrylate de lauryle, ainsi que les variantes propoxylées ou éthoxylées de ces diluants réactifs, des diluants réactifs uréthanisés, des éthers de vinyle ou des éthers d'allyle, seuls ou en mélanges, sont contenus en tant que composant B), en quantités de 5 à 90 % en poids, de préférence de 30 à 61 % en poids.

13. Formulation durcissable par rayonnement selon au moins l'une quelconque des revendications précédentes, **caractérisée en ce que** le composant C) est contenu en quantités de 0,1 à 10 % en poids, de préférence de 0,5 à 5 % en poids.

14. Formulation durcissable par rayonnement selon au moins l'une quelconque des revendications précédentes, **caractérisée en ce que** les photoinitiateurs D) sont contenus en quantités de 0,1 à 10 % en poids, de préférence de 1 à 8 % en poids.

15. Formulation durcissable par rayonnement selon au moins l'une quelconque des revendications précédentes, **caractérisée en ce que** le triacrylate de triméthylènepropane, le diacrylate de dipropylèneglcyol, le diacrylate de tripropylèneglycol, le diacrylate d'hexanediol et le tétraacrylate de pentaérythrite sont utilisés en tant que composant E), en quantités de 1 à 50 % en poids, de préférence de 1 à 20 % en poids.

16. Revêtements, contenant une formulation durcissable par rayonnement constituée par
A) au moins un polymère durcissable par rayonnement ayant un indice OH ≥ 10 mg de KOH/g choisi dans le groupe constitué par les (méth)acrylates d'uréthane, les (méth)acrylates de polyester, les (méth)acrylates de polyéther, les (méth)acrylates de polycarbonate et/ou les (méth)acrylates de poly(méth)acrylate, et
B) au moins un diluant réactif monofonctionnel durcissable par rayonnement,
C) au moins un promoteur d'adhésion acide, choisi parmi l'acide phosphorique ou l'acide phosphonique ou leurs produits de réaction avec des acrylates fonctionnalisés,
D) éventuellement des photoinitiateurs,
E) éventuellement des diluants réactifs polyfonctionnels,
F) éventuellement d'autres résines durcissables par rayonnement,
G) éventuellement des pigments et d'autres additifs.
